Europäisches Patentamt

European Patent Office

Office européen des brevets

(19)

(11) **EP 1 401 041 A2**

(12) **EUROPEAN PATENT APPLICATION**

(43) Date of publication:
**24.03.2004 Bulletin 2004/13**

(51) Int Cl.[7]: **H01M 8/04**

(21) Application number: **03021007.4**

(22) Date of filing: **17.09.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Yokoi, Taro**<br>**Fujisawa-shi Kanagawa-ken (JP)** |
| (30) Priority: **17.09.2002 JP 2002270121** | (74) Representative: **Grünecker, Kinkeldey,**<br>**Stockmair & Schwanhäusser Anwaltssozietät**<br>**Maximilianstrasse 58**<br>**80538 München (DE)** |
| (71) Applicant: **NISSAN MOTOR CO., LTD.**<br>**Yokohama-shi Kanagawa-ken (JP)** | |

(54) **Fuel cell system and related operating method**

(57)     A fuel cell system and a related operating method are disclosed wherein a fuel-line water recovery tank 19 collects water discharged from a fuel electrode of a fuel cell 1, and an air-line water recovery tank 13 collects water discharged from an air electrode of the fuel cell 1. Disposed downstream of the air-line water recovery tank 13 is a combustor 35 that combusts fuel gas expelled from the fuel-line water recovery tank 19, and air. In the presence of discrimination that water in the fuel-line water recovery tank 19 is to be discharged, a controller 7 opens a fuel-line water discharge valve 23 and allows collected water to be discharged.

FIG.1

**Description**

BACKGROUND OF THE INVENTION

The present invention relates to a fuel cell system, equipped with a water recovery tank that collects discharged from a fuel electrode of a fuel system, and related operating method.

In order for a solid polymer membrane widely used as an electrolyte of a fuel cell to have an ion transfer capability, there is a need for the solid polymer membrane to be appropriately humidified. Consequently, fuel gas and air to be used as oxidant gas must be supplied to the fuel cell under properly humidified condition.

Japanese Patent Application Laid-Open No. 2002-124290 discloses a technology of structuring a fuel cell system wherein, by utilizing a large amount of moisture contained in gas expelled from the fuel cell as a result of formation of water through electrochemical reaction between hydrogen and oxygen in the fuel cell, a water recovery tank is disposed in a gas discharging flow passage of the fuel cell to collect resulting water to allow water in the water recovery tank to be discharged to a system outside when prevailing at a given water level in a high level range while interrupting water from being discharged when prevailing at a given water level in a low level range. Here, the reason why water in the water recovery tank is not fully extracted is to prevent fuel gas from being discharged from a water outlet to the system outside.

Further, with the above technology, since attempt is made to interrupt discharging of water from the water recovery tank at a given time interval elapsed from the beginning of water being discharged, it is possible to accurately detect the given water level in the low level range inside the water recovery tank.

SUMMARY OF THE INVENTION

However, in a case where the fuel cell system of the above technology is applied to a moving object such as a vehicle, a probability occurs for the fuel cell system per se to suffer swinging to cause vertical fluctuation in the water level inside the water recovery tank to result in an inability of accurately measuring the water level.

In such a case, if an attempt is made through erroneous detection to provide a demand for discharging water regardless of a phase with no probability rightfully falling in a water level demanded for discharging water, operation is caused to begin discharging of water at such timing for a given time interval, resulting in an issue wherein water is fully discharged from the water recovery tank with a tendency of fuel gas being discharged to the system outside.

To this end, in view of the above issue, the present invention has an object to provide a fuel cell system and a related operating method which prevent fuel gas from being discharged to the system outside even if fuel gas is expelled from the water recovery tank that collects water discharged from the fuel cell.

To achieve the above object, according to one aspect of the present invention, there is provided a fuel cell system comprising a fuel-line water recovery tank collecting water discharged from a fuel electrode outlet of a fuel cell, a fuel-line water discharge discriminator discriminating to find whether collected water in the fuel-line water recovery tank is to be discharged, a combustor disposed in a downstream of a fuel-line water discharge port of the fuel-line water recovery tank to allow fuel expelled from the fuel-line water discharge port to be combusted with oxidant expelled from an oxidant electrode outlet of the fuel cell, and fuel-line water discharge flow passage closure unit operative to open and close a fuel-line water discharge flow passage between the fuel-line water discharge port and the combustor, wherein when the fuel-line water discharge discriminator discriminates that the collected water is to be discharged, the fuel-line water discharge flow passage closure unit is opened.

Another aspect of the present invention is a method of operating a fuel cell system, the method comprising preparing a fuel cell having a fuel electrode outlet and an oxidant electrode outlet, preparing a fuel-line water recovery tank collecting water discharged from the fuel electrode outlet, preparing a combustor disposed in a downstream of a fuel-line water discharge port of the fuel-line water recovery tank, preparing an fuel-line water discharge flow passage closure unit operative to open and close a fuel-line water discharge flow passage between the fuel-line water discharge port and the combustor, executing discrimination by a fuel-line water discharge discriminator to find whether collected water in the fuel-line water recovery tank is to be discharged, combusting fuel, expelled from the fuel-line water discharge port, with oxidant, expelled from the oxidant electrode outlet, in the combustor, and opening the fuel-line water discharge flow passage closure unit when the fuel-line water discharge discriminator discriminates that the collected water is to be discharged.

BRIEF DESCRIPTION OF THE DRAWINGS

Fig. 1 is an overall structural view of a fuel cell system of a first embodiment according to the present invention.
Fig. 2 is a control block diagram forming a controller sown in fig. 1.
Fig. 3 is a flowchart illustrating a basic sequence of discriminating operation of a fuel-line water discharge discriminator, forming part of the first embodiment, to carry out one operating method of the present invention.
Fig. 4 is a flowchart illustrating a basic sequence of discriminating operation of a fuel-line gas discharge discriminator, forming part of the first embodiment, to carry out the one operating method of the present invention.

Fig. 5 is a flowchart illustrating a basic sequence of discriminating operation of an air-line water discharge discriminator, forming part of the first embodiment, to carry out the one operating method of the present invention.

Fig. 6 is an overall structural view of a fuel cell system of a second embodiment according to the present invention.

Fig. 7 is a flowchart illustrating a basic sequence of discriminating operation of a fuel-line water discharge discriminator, forming part of the second embodiment, to carry out another operating method of the present invention.

Fig. 8 is a flowchart illustrating a basic sequence of discriminating operation of a fuel-line gas discharge discriminator, forming part of the second embodiment, to carry out another operating method of the present invention.

DETAILED DESCRIPTION OF THE PREFERRED EMBODIMENS

Hereinafter, embodiments of the present invention are described in detail with reference to the attached drawings.

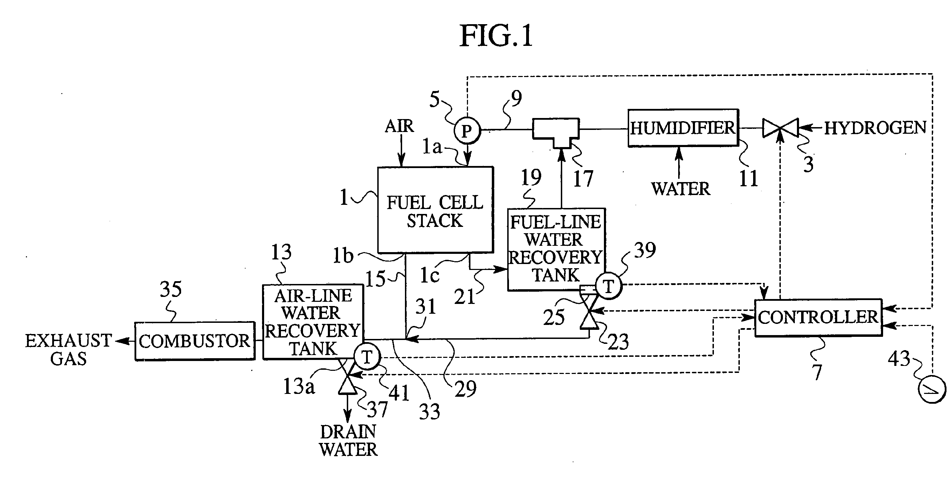

Fig. 1 is an overall structural view of a fuel cell system, of a first embodiment according to the present invention, which is applied to a moving object such as a vehicle.

While, in the presently filed embodiment, a fuel cell 1 is herein described below in connection with an example wherein air is used as oxidant and hydrogen is used as fuel gas, the present invention is not limited to such an example.

A fuel gas pressure regulator valve 3 is regulated to have an opening degree calculated by a controller 7 in response to a detected value of a pressure sensor 5 that serves as a fuel pressure detection means. The pressure sensor 5 is disposed in a fuel gas flow passage 9 connected to a fuel electrode inlet 1a of the fuel cell 1.

A humidifier 11 has a function to humidify hydrogen that is admitted. As a water source of the humidifier 11, water discharged from an air-line water recovery tank 13 may be utilized and circulated within the system. The air-line water recovery tank 13 is an oxidant-line water recovery tank, that collects condensed water from an air discharge flow passage 15 connected to an air electrode outlet 1b that serves as an oxidant electrode outlet of the fuel cell 1, and forms a second water recovery tank. Also, if the fuel cell system is of a stationary type, the water source of the above humidifier 11 may utilize water resulting from service water after it has been treated.

An ejector 17 has a function of a pump that supplies unused fuel gas, expelled from a fuel electrode outlet 1c of the fuel cell, to the fuel cell 1 again.

A fuel-line water recovery tank 19 is connected to the fuel electrode outlet 1c via a fuel gas delivery pipe 21 to collect condensed water from the fuel-gas-line. In order to achieve such a function, the fuel-line water recovery tank 19 may be preferably located at the lowermost position along a vertical height of the fuel-gas-line.

When discharging collected water from the fuel-line water recovery tank 19, a fuel-line water discharge valve 23 serving as a fuel-line water discharge flow passage closure means is opened. When the fuel-line water discharge valve 23 is opened, water in the fuel-line water recovery tank 19 is expelled through an orifice 25 and the fuel-line water discharge valve 23 to a fuel-line water discharge delivery pipe 29.

The orifice 25 forms a fuel-line exhaust port of the fuel-line water recovery tank 19 and has a flow sectional area preset to be smaller than a flow sectional area of the fuel-line water discharge delivery pipe 29 downstream of the orifice 25.

The fuel-line water discharge delivery pipe 29 has its downstream end connected to an end of a downstream of the above air-line discharge flow passage 15 at a junction 31 through which the fuel-line water discharge delivery pipe 29 is further connected to the air-line water recovery tank 13 via a confluence delivery pipe 33. For this reason, water expelled to the fuel-line water discharge delivery pipe 29 is collected in the air-line water recovery tank 13 and, simultaneously, if fuel-line gas is exhausted, then reaction between fuel-line gas and air takes place in a combustor 35, connected to the air-line water recovery tank 13 at a downstream side thereof, by which noncombustible and non-noxious gas is discharged to the atmosphere.

Further, water collected in the air-line water recovery tank 13 is discharged by opening an air-line water discharge valve 37, disposed at an air-line water discharge outlet 13a formed at a lower portion of the air-line water recovery tank 13, that serves as an oxidant-line water discharge flow passage closure unit. Opening and closing of the air-line water discharge valve 37 and the fuel-line water discharge valve 23 are controlled by the controller 7.

Temperature gages 39, 41 detect the temperature of the fuel-line water recovery tank 19 and the temperature of the air-line water recovery tank 13, respectively, with resulting measured values being outputted to the controller 7.

An accelerator sensor 43 in the vehicle serves to input an associated incremental displacement value, that is, a load demand of a driver to the controller 7.

Now, control calculated by the controller 7 is described.

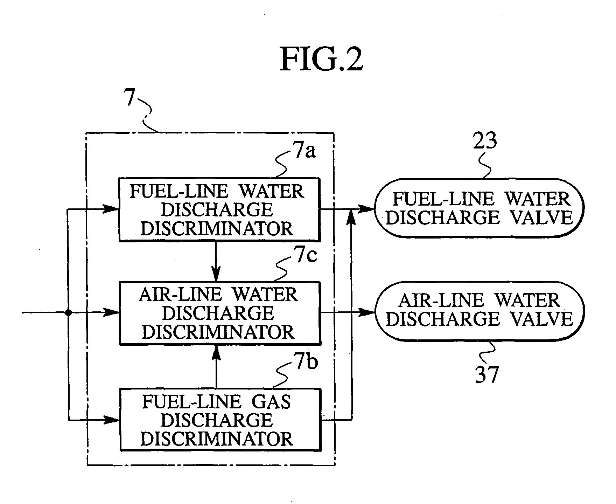

Fig. 2 is a control block diagram of the first embodiment. The controller 7 is comprised of a fuel-line water discharge discriminator 7a, a fuel-line gas discharge discriminator 7b and an air-line water discharge discriminator serving as an oxidant-line water discharging unit, with controls to be performed by these discriminators 7a, 7b, 7c being executed in parallel whereupon when permission is made, then valve opening commands are outputted to associated valves 23, 37.

However, in a case where the fuel-line water discharge valve 23 or for a given time interval after the valve has been closed even in the occurrence of the valve being closed, the fuel-line water discharge discriminator 7a or the fuel-line gas discharge discriminator 7b do not provides permissions to open the valves even in the presence of a demand for opening the air-line water discharge valve 37.

Next, detailed control flows of the above respective discriminators 7a, 7b, 7c are described.

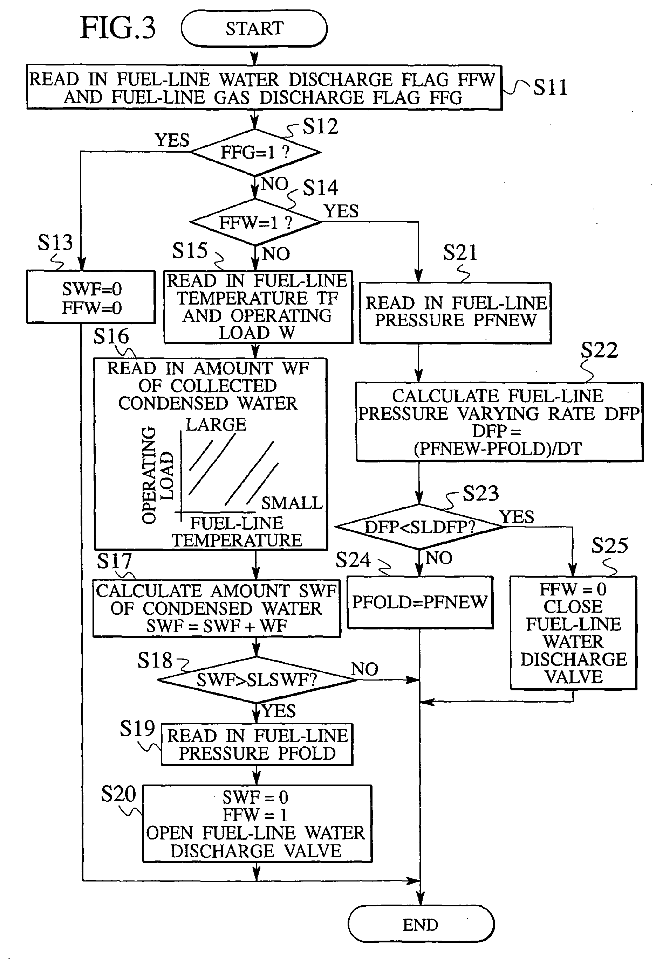

Fig. 3 is a flowchart illustrating discriminating operations of the fuel-line water discharge discriminator 7a for carrying out one operating method of the present invention.

First, a fuel-line water discharge flag FFW and a fuel-line gas discharge flag FFG are read in (step S11). Here, if the fuel-line water discharge flag FFW is found to have a value of 1, this remains in a state wherein the fuel-line water discharge is permitted and, if the fuel-line water discharge flag FFW is found to have a value of 0, this remains in a non-permission state. Further, if the fuel-line gas discharge flag FFG is found to have a value of 1, this remains in a state wherein the fuel-line gas discharge is permitted and, if the fuel-line gas discharge flag FFG is found to have a value of 0, this remains in a non-permission state.

Next, discrimination is made to find whether the fuel-line gas discharge is permitted (step S12). If permission is found to exist (FFG = 1), because of water discharge in the fuel-line being executed by the fuel-line gas discharge discriminator 7b in a manner that will be described later, a variable SWF, that will be described below, and the fuel-line water discharge flag FFW are initiated at 0 (step S13), thereby interrupting this flow.

In step S12, if the fuel-line gas discharge is found to remain in the non-permission state (FFG = 0), then, discrimination is made to find whether the fuel-line water discharge is permitted (step S14). In the absence of permission (FFW = 0), a fuel-line temperature TF measured by the temperature gage 39 and an operating load W of the fuel cell 1 associated with the accelerator sensor 43 are read in (step S15).

Subsequently, in response to the above fuel-line temperature TF and the operating load W, the amount WF of condensed water that is collected is obtained (step S16). Then, from the resulting amount WF of collected condensed water, the amount SWF of water currently accumulated in the fuel-line water recovery tank 19 is calculated in the following formula (1) (step S17).

$$SWF = SWF + WF \qquad (1)$$

That is, in step S16, a water increasing rate per unit time is obtained as functions of the fuel-line temperature TF and the operating load W and is integrated in step S17.

Also, as shown in step S16, a map is preliminarily determined such that, the lower the fuel-line temperature TF and, also, the higher the operating load W, the larger will be the amount WF of collected condensed water.

Subsequently, discrimination is made to find whether the amount SWF of water calculated in a manner previously discussed exceeds a given value SLSWF (step S18) and if the water amount SWF is found not to exceed the given value SLSWF, present flow is terminated whereas, if the water amount SWF is found to exceed the given value SLSWF, then, a fuel-line pressure PFOLD is read in response to the output of the pressure sensor 5 (step S19).

Consecutively, for subsequent integrating, the amount SWF of water calculated above is reset to zero, and the fuel-line water discharge flag FFW is set to 1 to provide permission for discharging fuel-line water while opening the fuel-line water discharge valve 23 whereupon present flow is terminated (step S20).

In step S14, if fuel-line water has been already permitted to be discharged (FFW = 1), the fuel-line pressure is read in responsive to the output of the pressure sensor 5 and a resulting value is substituted for PFNEW (step S21).

Subsequently, a fuel-line pressure varying rate DFP is calculated in the following formula.

$$DFP = (PFNEW - PFOLD)/DT \qquad (2)$$

Here, DT represents a control cycle of present flow and, if DT remains in a fixed cycle, then DT may not be objectionable to be a constant whereas, if an execution cycle varies, use is made for an interval between preceding flow, that has been previously executed, and current flow to be executed executed.

Using this calculated result, discrimination is made to find whether the fuel-line pressure exceeds a given value SLDFP (step S23). Here, if the fuel-line pressure drops below the given value SLDFP (step S23), that is, when the fuel-line pressure rapidly drops, it is probable that the formula (2) has a negative value large in an absolute value.

If discrimination is made that the fuel-line pressure does not drops below the given value SLDFP, the above PFNEW is substituted for PFOLD (step S24) and present flow is terminated. In contrast, if discrimination is made that the fuel-line pressure drops below the given value, then it is judged that discharging of water is terminated, and the fuel-line discharge flag FFW is initialized at 0 to close the fuel-line water discharge valve 23 (step S25) whereupon present flow is terminated.

Execution of present flow allows proper judgment to be conducted for a discharge timing and a completed discharge timing, resulting in a capability of favorably operating the fuel cell system.

Also, judgment of the above fuel-line discharge timing may be conducted responsive to any one of the operating load W and the fuel-line temperature TF and, also, operating the fuel-line drainage valve 23 based on a time interval elapsed after the valve has been previously closed enables further simplified control to be achieved.

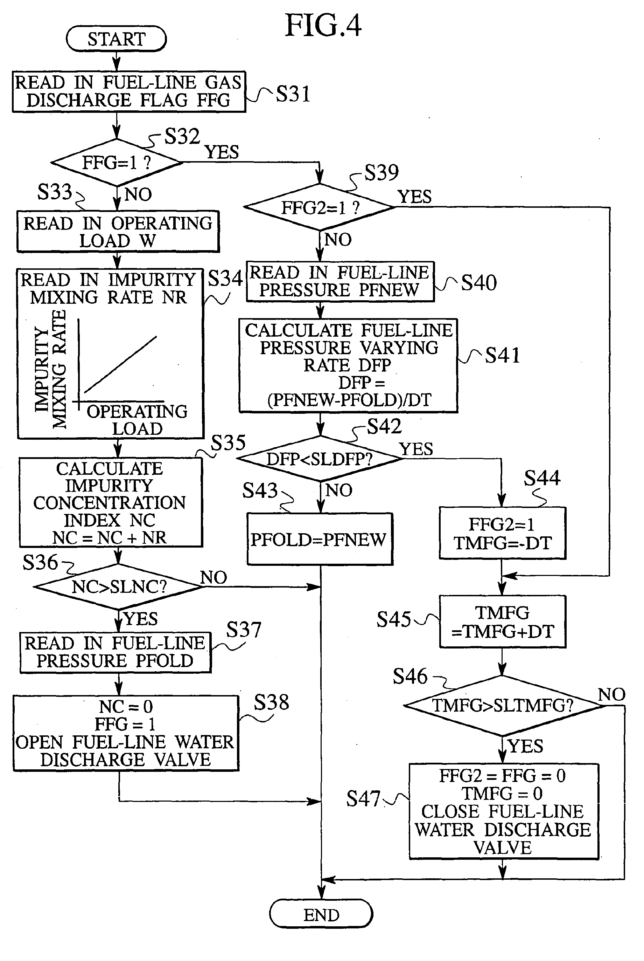

Next, discriminating operation of the fuel-line gas discharge discriminator 7b for carrying out the one operating method of the present invention is described with reference to a flowchart of Fig. 4.

First, the fuel-line gas discharge flag FFG is read in (step S31). If the flag FFG has a value of 1, this represents a status in that discharging of the fuel-line gas is permitted and, if the flag FFG has a value of 0, this represents a status in that discharging of the fuel-line gas is not permitted.

Subsequently, discrimination is made to find whether the fuel-line gas discharge is permitted (step S32) and, if no such permission exists (FFG = 0), then the operating load W associated with the accelerator sensor 43 is read in (step S33) to allow a mixture ratio NR of impurities contained in the current fuel-line correlated with the operating load W to be obtained (step S34).

Then, from the resulting impurity mixture rate NR, an impurity concentration index NC is calculated using the following formula (step S35).

$$NC = NC + NR \qquad (3)$$

That is, in step S34, an impurity incremental rate per unit time is obtained as a function of the operating load W and is integrated in step S35.

Also, as shown in step S34, a map is preliminarily determined such that the larger the impurity mixture rate NR, the larger will be the operating load W.

Next, discrimination is made to find whether the calculated impurity concentration index NC exceeds a given value SLNC (step S36) and, if the calculated impurity concentration index NC does not exceed the given value, preset flow is terminated whereas, if the calculated impurity concentration index NC exceeds the given value, the fuel-line pressure PFOLD resulting from the pressure sensor 5 is read in (step S37).

Consecutively, for subsequent integrating, the calculated impurity concentration index NC is reset to zero and the fuel-line gas discharge flag FFG is set to 1 for thereby permitting to discharge fuel-line gas while opening the fuel-line water discharge valve 23 whereupon present flow is terminated (step S38).

In step S32, if discharging of the fuel-line gas has been already permitted (FFG = 1), then discrimination is made to find whether a fuel-line gas discharging flag FFG2 remains at 1 (during exhaust of fuel-line gas) or 0 (in which fuel-line gas is not still exhausted) (step S39) and, if FFG2 = 0, flow is routed to step S40.

Steps S40 to S43 are similar to steps S21 to S24 in Fig. 3 set forth above and, hence, detailed description of the same is herein omitted.

In step S42, if discrimination is made that the fuel-line pressure drops below the given value SLDFP and discharging of water is terminated, it is judged that discharging of fuel-line gas is started and the fuel-line discharging flag FFG2 is set to 1 to set a fuel-line gas discharge time measurement timer TMFG is set to —DT. Here, DT has the same meaning as DT in the formula (2) and detailed description of the same is herein omitted.

In step S39, the fuel-line gas discharging flag FFG2 has been already set to 1, flows in steps S40 to S44 are omitted and operation is executed from subsequent step S45.

In step S45, DT that is already described is added to the fuel-line gas discharge time measurement timer TMFG, and discrimination is made to find whether a resultant calculation result exceeds a given time interval SLTMFG (step S46) whereupon, if the resultant calculation result is not found to exceed the given time interval, then present flow is terminated. If, in contrast, the resultant calculation result is found to exceed the given time interval, then discrimination is made that discharging of fuel-line gas has been terminated and FFG and FFG2 are initialized at 0 while, also, the fuel-line gas discharge time measurement timer TMFG is reset to 0 to allow the fuel-line water discharge valve 23 to be closed (step S47).

By executing the above flows, exhausting of fuel-line gas can be appropriately executed.

Also, by executing discrimination of the exhaust timing of fuel-line gas set forth above at an elapsed time after the fuel-line water discharge valve 23 has been previously closed or in response to the voltage of the fuel cell 1, further simplified control can be achieved.

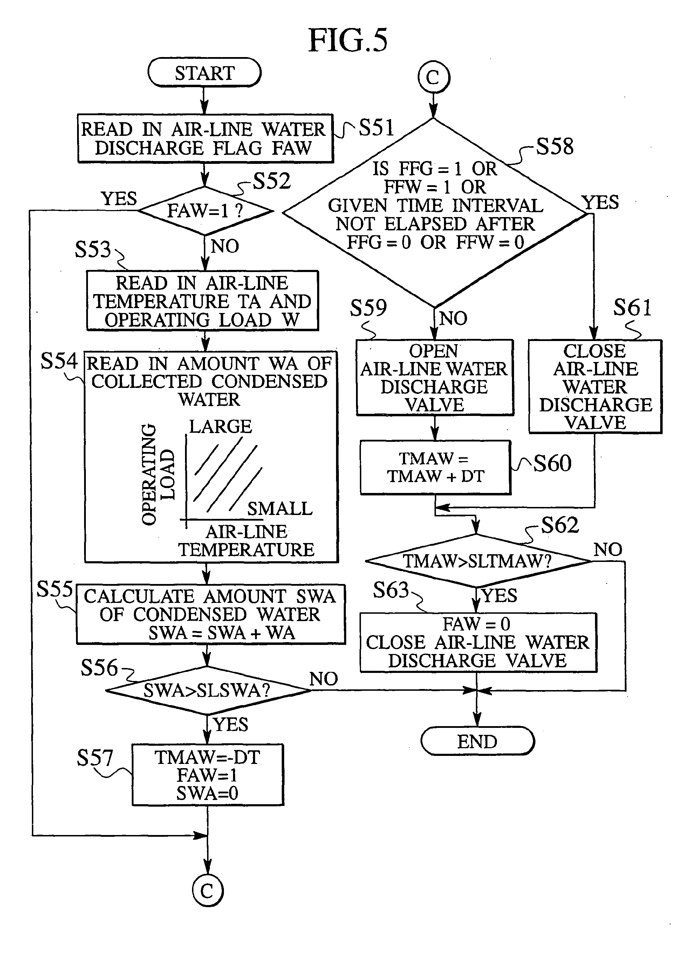

Next, discriminating operation of the air-line water discharge discriminator 7c for carrying out the one operating method of the present invention is described with reference to a flowchart of Fig. 5.

First, the air-line water discharge flag FAW is read in (step S51). If the flag FAW has a value of 1, this represents a status in that discharging of air-line water is permitted and, if the flag FAW has a value of 0, this represents a status in that discharging of air-line water is not permitted.

Subsequently, discrimination is made to find whether discharging air-line water is permitted (step S52) and, if no such permission exists (FAW = 0), then the air-line temperature TA measured by the temperature gage 41 and the operating load W associated with the accelerator sensor 43 are read in (step S53).

Consecutively, the amount WA of collected condensed water is obtained in response to the above air-line temperature TA and the operating load W (step S54). Then, from a resulting amount WA of collected condensed water, the amount SWA of water accumulated in the current air-line water recovery tank 13 is calculated using the following formula (4) (step S55).

$$SWA = SWA + WA \qquad (4)$$

That is, in step S54, a water increasing rate per unit time is obtained as functions of the air-line temperature TA and the operating load W and is integrated in step S55.

Also, as shown in step S54, a map is preliminarily determined such that the lower the air-line temperature TA and, also, the larger the operating load W, the larger will be the amount WA of collected condensed water.

Next, discrimination is made to find whether the calculated amount SWA of water calculated as described above exceeds a given value SLSWA (step S56) and, if the calculated water amount is found not to exceed the given value, preset flow is terminated whereas, if the calculated water amount is found to exceed the given value, an air-line gas discharge time measurement timer TMAW is set to—DT and the air-line water discharge flag FAW is set to 1 to permit air-line water from being discharged while, further, resetting the amount SWA of water for subsequent integrating of WA to zero (step S57). Here, DT has the same meaning as DT in the formula (2) and detailed description of the same is herein omitted.

Consecutively, discrimination is made to find whether the fuel cell system water discharge flag FFW or the fuel-line gas discharge flag FFG have a value of 1, that is, whether the fuel-line water discharge valve 23 is opened, or whether, even in the closed state, a given time interval has elapsed after the valve has been closed (step S58).

Here, if the fuel-line water discharge valve 23 is opened, or even in the closed state if the given time interval has not elapsed after the valve has been closed, the air-line water discharge valve 37 is closed (step S61). On the contrary, that is, when the given time interval has elapsed after the fuel-line water discharge valve 37 is opened (step S59), and the air-line gas discharge time measurement timer TMAW is advanced by DT minutes (step S60).

Here, if the fuel-line water discharge valve 23 is opened or if the given time interval has not elapsed even when the valve is closed, there is a probability in that fuel gas flows into an area close proximity to the air-line water recovery tank 13. For this reason, in steps S58 to S61, even if water in the air-line condensed water tank 13 exceeds a given water level, the air-line water discharge valve 37 is closed to prevent fuel-line gas from being exhausted to the system outside.

Also, since the air-line gas discharge time measurement timer TMAW is not advanced during a period in which the fuel-line water discharge valve 23 is closed, no probability occurs in which discharging of water is incomplete.

Subsequently, discrimination is made to find whether the air-line gas discharge time measurement timer TMAW exceeds the given time interval SLTMAW (step S62) and, if not, flow is terminated in situ. In contrast, if the air-line gas discharge time measurement timer TMAW exceeds the given time interval SLTMAW, it is discriminated that discharging of water from the air-line water recovery tank 13 is completed, and the air-line water discharge flag FAW is initialized at 0 to close the air-line water discharge valve 37 (step S63).

By executing respective flows set forth above, water of the fuel-line and air-line is enabled to be discharged to the system outside without providing water level sensor in the water recovery tank 13. Additionally, since the fuel-line water discharge valve 23 can be doubled for discharging gas and water in the fuel-line, it is possible to structure a system excellent in cost and layout.

Further, in a case where the fuel-line water recovery tank 19 is further largely sized, although such a largely sized water recovery tank is not advantageous in terms of the layout, fuel-line water is discharged not by a command of the fuel-line water discharge discriminator 7a but by a command of the fuel-line gas discharge discriminator 7b. Then, no probability of flow of fuel gas followed by flow of fuel-line water tends to occur with a resultant capability for fuel-line water to be forced out with gas that must be necessarily expelled and, thus, a system efficiency can be improved. Furthermore, by selecting the given value SLSWF that forms a discriminating value of the water amount SWF of the fuel-line water recovery tank 19 to fall in a value as low as possible, it is possible for water remaining in the fuel-line water recovery tank 19 to be decreased. Although this is not preferable in terms of the system efficiency, it is advisable for water in the fuel-line water recovery tank 19 to be less than that required in an urgent fuel-line gas discharging demand, and electric power generation of the fuel cell 1 can be maintained in a favorable state at all time.

In the presently filed embodiment, due to the presence of a structure wherein the combustor 35 is provided to combust fuel expelled from the fuel-line water discharge outlet (orifice 25) and air expelled from the air electrode outlet 1b of the fuel cell 1 while, when collected water is discharged, the fuel-line water discharge valve 23 for opening and closing the fuel-line water discharge flow passage between the orifice 25 and the combustor 35 is opened, even when fuel gas is expelled from the fuel-line water recovery tank 19, fuel is combusted in the combustor 35 located downstream of the fuel-line water recovery tank 19 and, thereafter, exhaust gas is expelled, with no fear that fuel gas is expelled in situ to the system outside.

Further, in view of protecting fuel gas from being exhausted to the system outside, there is no need for strict water level management of the fuel-line water recovery tank 19 and, thus, water can be discharged in the absence of a water level sensor, enabling a favorable system which is effective in cost and layout.

Furthermore, due to the presence of a structure wherein the air-line water recovery tank 13 for recovery of water is disposed between the combustor 35 and the fuel-line water discharge valve 23, water discharged from the fuel-line water recovery tank 19 is protected from entering the combustor 35, and it becomes possible to avoid an issue of an inability of combusting exhaust gas because of a drop in temperature of the combustor 35 caused by discharged water.

Moreover, due to an ability of the air-line water recovery tank 13, that is originally required to collect water from the air-line, which is rendered to doubled to have the above role, no separate tank is needed for specifically protecting water from entering the combustor 35, resulting in an advantageous effect which is effective in cost and layout.

Besides, due to the presence of a structure wherein, if the fuel-line water discharge valve 23 is opened, or even when collected water is required to be discharged to the outside of the air-line water recovery tank 13, the air-line water discharge valve 37 is not opened for the given time interval after the valve has been closed, no probability exists for fuel gas to be expelled to the system outside from the air-line water discharge port 13a.

Additionally, due to the presence of a structure wherein, when the fuel-line pressure prevailing after the fuel-line water discharge valve 23 has been opened rapidly drops below the given value, discrimination is made that discharging of water from the fuel-line water recovery tank 19 to the outside thereof has been completed, no specific sensor is needed to be mounted, resulting in an advantageous effect which is effective in cost and layout.

Also, due to the presence of the fuel-line water discharge port with the orifice 25 having the flow sectional area smaller than the flow sectional area downstream of the orifice, it is possible for the fuel-line to have a distinct pressure drop, resulting in a capability of reliably implementing judgment as to whether discharging of water has been completed.

Additionally, due to the presence of a structure wherein the fuel-line water discharge discriminator 7a performs discrimination based on at least any one of the operating load W of the fuel cell 1, the fuel-line temperature TF, and the time interval elapsed after the fuel-line water discharge valve 19 has been previously closed, discrimination as to timing at which water is to be discharged can be implemented without a water level sensor being located.

Further, due to the presence of a structure wherein, even when expelling fuel-line gas to the outside of the fuel-line, the fuel-line water discharge valve 23 is arranged to be opened, it is possible to allow fuel-line gas to be expelled without providing a separate valve.

Furthermore, since fuel gas necessarily passes through the combustor 35 before it is expelled to the atmosphere, no probability occurs for fuel gas to be discharged to the outside in situ, providing a capability for a system appropriate for an environment to be structured.

Moreover, due to the presence of a structure wherein the fuel-line pressure prevailing after the fuel-line water discharge valve 23 has been opened is used to conduct discrimination as to whether fuel-line gas has been completely expelled to the outside of the fuel-line, on the basis of the time interval elapsed from the timing at which fuel-line gas decreases (rapidly drops) below the given value, discrimination as to whether discharging of fuel gas has been completed can be conducted employing the pressure sensor 5 that is used for normal gas pressure control and no specific sensor is required to be mounted, resulting in an advantageous effect which is effective in cost and layout.

Also, since discrimination as to whether fuel-line gas is expelled to the outside of the fuel-line is conducted based on at least any of the operating load of the fuel cell 1, the time interval elapsed after the fuel-line water discharge valve 23 has been previously closed, and the output voltage of the fuel cell 1, it is possible for fuel-line gas to be discharged at an appropriate timing.

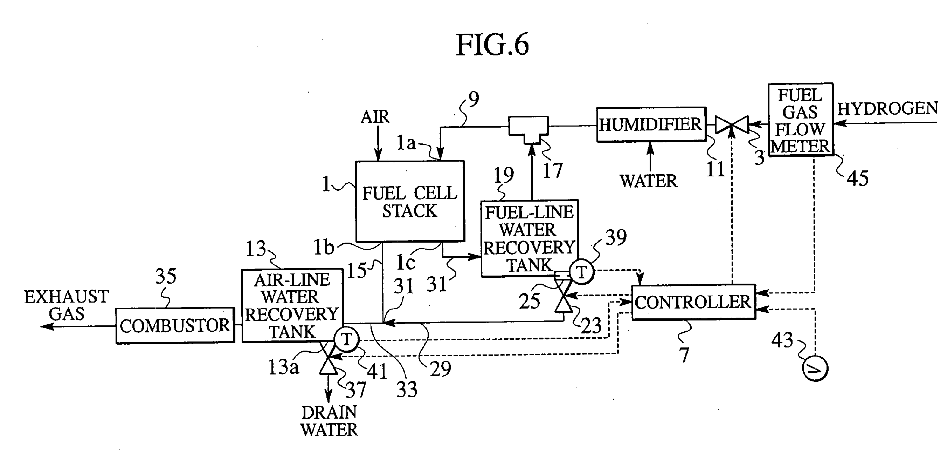

Fig. 6 is an overall structural view of a fuel cell system of a second embodiment according to the present invention, which represents an example that employs a fuel gas flow meter to execute discrimination to find whether discharging of fuel-line water has been completed. A control block diagram and control operation of an air-line water discharge discriminator are common to those of the first embodiment shown in Fig. 2. Also, in Fig. 6, the same component parts as those of Fig. 1 bear the like reference numerals. The presently filed embodiment differs from the first embodiment in that the pressure sensor 5 is unnecessary and a fuel gas flow meter 45 is added.

Next, detailed control flows to be performed by the respective discriminator 7a, 7b are described.

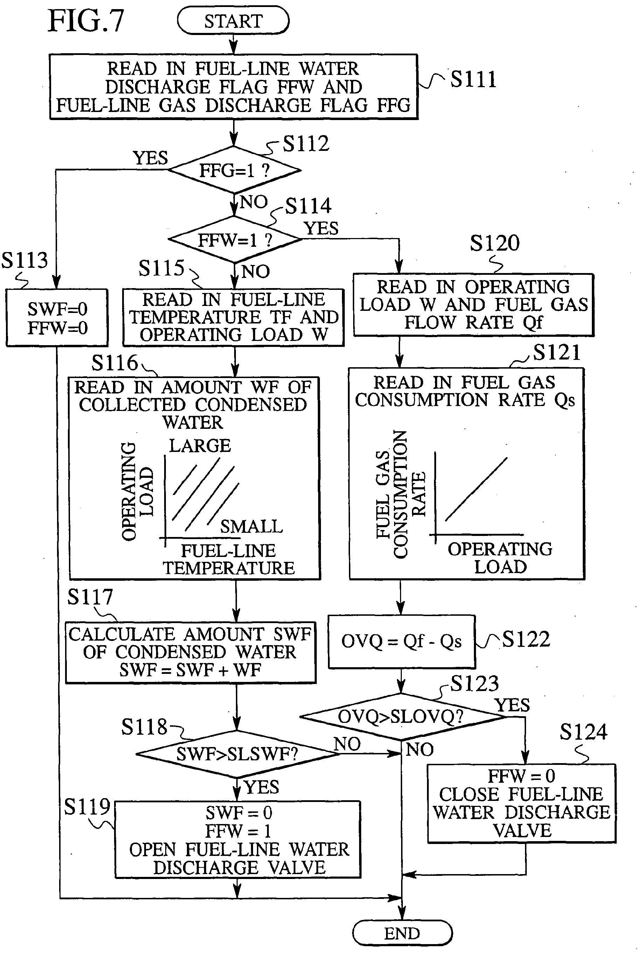

Fig. 7 is a flowchart illustrating discriminating operation of the discriminator 7a.

Here, steps S111 to S118, and S119 and S124 are similar to steps S11 to S18, S20 and S25 of the first embodiment and, so, detailed descriptions of the same are herein omitted.

In step S114 similar to step s14 in Fig. 3, if discharging of fuel-line water is permitted (FFW = 1), the operating load W of the fuel cell 1 and the fuel gas flow rate Qf obtained in dependence upon the measured value of the fuel gas flow meter 45 are read in (step S120). Then, operation is executed to calculate the fuel gas consumption rate Qs, resulting from consumption of the fuel cell 1, in relation to the operating load W that has been read in (step S121).

Also, as shown in step S121, a map is preliminarily determined such that the higher operating load W, the larger will be the fuel gas consumption rate Qs.

Subsequently, the flow rate of fuel gas consumed by the other component parts other than the fuel cell 1, that is the expelled fuel gas flow rate OVQ is obtained in the following formula (5) (step S122).

$$OVQ = Qf - Qs \qquad (5)$$

Then discrimination is made to find whether a resulting value OVQ exceeds a given value SLOVQ (step S123) and, if the resulting value exceeds the given value, the fuel-line water discharging FFW is reset to 0, to represent that fuel-line water has been discharged, whereupon the fuel-line water discharge valve 23 is closed (step S124) and present flow is terminated. Conversely, if OVQ does not exceed SLOVQ, present flow is terminated in situ.

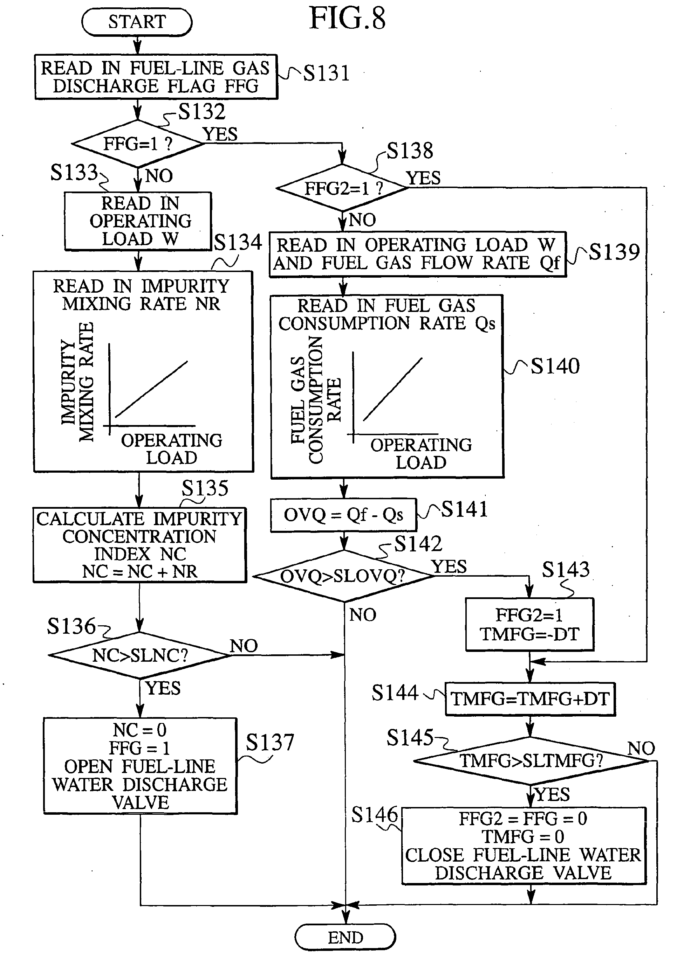

Fig. 8 is a flowchart illustrating discriminating operation of the fuel-line gas discharge discriminator 7b.

Here, since steps S131 to S136, S137, S138 and S143 to S146 are similar to steps S31 to S36, S38, S39 and S44 to S47 of the first embodiment described above, detailed description of these steps is herein omitted.

In steps S138 similar to step S39 of Fig. 3, if it is discriminated that the fuel-line gas discharge flag FFG2 has a value of 0 (with no fuel-line gas being still exhausted), the operating load Wand the fuel gas flow rate Qf obtained depending upon the measured value of the fuel gas flow meter 45 are read in, respectively (step S139). Then, fuel gas consumption rate Qs, to be consumed by the fuel cell 1, in terms of the operating load W that has been read in is calculated (step S140).

Also, as shown in step S140, a map is preliminarily determined such that the higher the operating load W, the larger will be the fuel gas consumption rate Qs.

Subsequently, the flow rate of fuel gas consumed by the other component parts than the fuel cell 1, that is, the discharged fuel gas flow rate OVQ is obtained in the formula (step S141).

Then, discrimination is made to find whether a resulting value OVQ exceeds the given value SLOVQ (step S142) whereupon, if the resulting value OVQ exceeds the given value, it is supposed that discharging of fuel-line water has been terminated and, thereafter, flow is routed to step S143 with a view to rendering fuel gas to be expelled. On the contrary, if OVQ does not exceed SLOVQ, present flow is terminated in situ.

By executing respective flows set forth above, even when the fuel gas flow meter 45 is disposed in place of the pressure sensor 5 of the first embodiment shown in Fig. 1, the same advantageous effect as that of the first embodiment is obtained. Also, since the existing sensor (the fuel gas flow meter 45) is employed, it is possible to structure a system which is cost effective.

Further, while the second embodiment has been described with reference to the system wherein the fuel gas flow meter 45 is added, the fuel gas flow rate may be predicted from the opening degree or the fore and aft pressures of the fuel gas regulator valve 3. Also, in the second embodiment, discrimination as to whether discharging of fuel gas has been completed is executed based on the time interval elapsed from the timing at which the discharged fuel gas flow rate OVQ exceeds the given value SLOVQ, such discrimination may be conducted on the basis of an integrated value of OVQ.

The presently filed embodiment has the following advantages.

Since the fuel gas consumption rate of the fuel cell 1, that is predicted from the fuel gas flow rate and the operating load, is used for discrimination as to whether discharging of fuel-line gas has been completed to the system outside, it is possible to execute accurate discrimination as to whether discharging of fuel-line gas has been completed.

Due to a capability of discrimination, as to whether discharging of water has been completed, utilizing the fuel gas flow meter 45 that is used for normal gas flow control, no specific sensor is required to be mounted, such discrimination is advantageous in layout and cost.

Further, since discrimination is made to find whether, when the fuel gas flow rate exceeds the given value and rapidly increases, collected water is discharged to the outside of the fuel-line water recovery tank 19, reliable discrimination can be executed to find that discharging of water has been completed and no specific sensor is required to be mounted, resulting in an advantage that is effective in layout and cost.

The entire content of Japanese Patent Application No. P2002-270121 with a filing date of September 17, 2002 is herein incorporated by reference.

Although the present invention has been described above by reference to certain embodiments of the invention, the invention is not limited to the embodiments described above and modifications will occur to those skilled in the art, in light of the teachings. The scope of the invention is defined with reference to the following claims.

**Claims**

1. A fuel cell system comprising:

a fuel-line water recovery tank (19) collecting water discharged from a fuel electrode outlet (1c) of a fuel cell (1);

a fuel-line water discharge discriminator (7a) discriminating to find whether collected water in the fuel-line water recovery tank is to be discharged;

a combustor (35) disposed in a downstream of a fuel-line water discharge port of the fuel-line water recovery tank (19) to allow fuel expelled from the fuel-line water discharge port to be combusted with oxidant expelled from an oxidant electrode outlet (1b) of the fuel cell; and

a fuel-line water discharge flow passage closure unit (23) operative to open and close a fuel-line water discharge flow passage between the fuel-line water discharge port and the combustor; wherein

when the fuel-line water discharge discriminator (7a) discriminates that the collected water is to be discharged, the fuel-line water discharge flow passage closure unit is opened.

2. The fuel cell system according to claim 1, further comprising:

a second water recovery tank (13) disposed between the combustor and the fuel-line water discharge flow passage closure unit.

3. The fuel cell system according to claim 2, wherein the second water recovery tank (13) includes an oxidant-line water recovery tank (13) that collects water discharged from the oxidant electrode outlet of the fuel cell.

4. The fuel cell system according to claims 2 or 3, further comprising:

an oxidant-line water discharge flow passage closure unit (37) operative to open and close an oxidant-line water discharge flow passage extending from a lower portion of the second water recovery tank (13); and

an oxidant-line water discharge discriminator (7c) discriminating to find whether collected water in the second water recovery tank is to be discharged; wherein

when the fuel-line water discharge flow passage closure unit (23) is opened or during a given time interval elapsed after the fuel-line water discharge flow passage closure unit has been closed, the oxidant-line water discharge flow passage closure unit (37) is not opened even if the oxidant-line water discharge discriminator (7c) discriminates to discharge the collected water from the second water recovery tank.

5. The fuel cell system according to any of preceding claims 1 to 4, further comprising:

a fuel pressure detector (5) disposed in a fuel gas flow passage connected to a fuel electrode inlet (1a) of the fuel cell to detect a fuel pressure; wherein

when the fuel pressure detected by the fuel pressure detector drops below a given value after the fuel-line water discharge flow passage closure unit (23) has been opened, the fuel-line water discharge discriminator (7a) discriminates that discharging of the collected water in the fuel-line water recovery tank has been completed.

6. The fuel cell system according to claim 5, wherein the fuel-line water discharge flow passage has a flow sectional area smaller than a flow sectional area of a downstream of the fuel-line water discharge flow passage.

7. The fuel cell system according to any of preceding claims 1 to 6, further comprising:

a fuel flow rate detector (45) disposed in a fuel electrode inlet (1a) of the fuel cell (1) to measure the flow rate of fuel gas; wherein

when the flow rate of fuel detected by the fuel flow rate detector (45) exceeds a given value, the fuel-line water discharge discriminator (7a) discriminates that discharging of the collected water in the fuel-line water recovery tank has been completed.

8. The fuel cell system according to any of preceding claims 1 to 7, wherein the fuel-line water discharge discriminator (7a) executes discrimination as to discharging of water based on at least any one of an operating load of the fuel cell, the temperature of the fuel-line and a time interval elapsed after the fuel-line water discharge flow passage closure unit has been previously closed.

9. The fuel cell system according to claim 1, further comprising:

a fuel-line gas discharge discriminator (7a) discriminating to find whether fuel expelled from the fuel electrode outlet of the fuel cell is to be discharged to a system outside; wherein

when the fuel is discharged to the system outside, the fuel-line water discharge flow passage closure unit is opened.

10. The fuel cell system according to claim 9, further comprising:

a fuel pressure detector (5) disposed in a fuel electrode inlet (1a) of the fuel cell (1) to detect a fuel pressure; wherein
on the basis of a time interval elapsed from a timing at which, after the fuel-line water discharge flow passage closure unit (23) has been opened, a fuel pressure detected by the fuel pressure detector drops below a given value, the fuel-line gas discharge discriminator discriminates that discharging of fuel-line gas has been completed.

**11.** The fuel cell system according to claims 9 or 10, further comprising:

a fuel flow rate detector (45) disposed in a fuel gas flow passage connected to a fuel electrode inlet (1a) of the fuel cell to measure the flow rate of fuel gas; wherein
on the basis of the flow rate of the fuel detected by the fuel flow rate detector and a fuel consumption rate predicted from an operating load of the fuel cell, the fuel-line gas discharge discriminator (7b) discriminates to find whether discharging of fuel-line gas to the system outside has been completed.

**12.** The fuel cell system according to any of preceding claims 9 to 11, wherein the fuel-line gas discharge discriminator (7b) executes discrimination as to discharging of fuel gas based on at least any one of an operating load of the fuel cell, a time interval elapsed after the fuel-line water discharge flow passage closure unit has been previously closed, and a voltage of the fuel cell.

**13.** A method of operating a fuel cell system, the method comprising:

preparing a fuel cell (1) having a fuel electrode outlet and an oxidant electrode outlet;
preparing a fuel-line water recovery tank (19) collecting water discharged from the fuel electrode outlet;
preparing a combustor (35) disposed in a downstream of a fuel-line water discharge port of the fuel-line water recovery tank;
preparing an fuel-line water discharge flow passage closure unit (23) operative to open and close a fuel-line water discharge flow passage between the fuel-line water discharge port and the combustor;
executing discrimination by a fuel-line water discharge discriminator (7a) to find whether collected water in the fuel-line water recovery tank is to be discharged;
combusting fuel, expelled from the fuel-line water discharge port, with oxidant, expelled from the oxidant electrode outlet, in the combustor;

and
opening the fuel-line water discharge flow passage closure unit when the fuel-line water discharge discriminator discriminates that the collected water is to be discharged.

## FIG.1

# FIG.2

7

7a

| FUEL-LINE WATER DISCHARGE DISCRIMINATOR |

7c

| AIR-LINE WATER DISCHARGE DISCRIMINATOR |

7b

| FUEL-LINE GAS DISCHARGE DISCRIMINATOR |

23

| FUEL-LINE WATER DISCHARGE VALVE |

| AIR-LINE WATER DISCHARGE VALVE |

37

FIG.3

START

READ IN FUEL-LINE WATER DISCHARGE FLAG FFW
AND FUEL-LINE GAS DISCHARGE FLAG FFG — S11

S12

YES — FFG=1 ?

NO — S14

FFW=1 ? — YES

S13 — SWF=0
FFW=0

S15 — READ IN FUEL-LINE
TEMPERATURE TF
AND OPERATING
LOAD W

S21 — READ IN FUEL-LINE
PRESSURE PFNEW

S16 — READ IN AMOUNT WF
OF COLLECTED
CONDENSED WATER

LARGE

OPERATING LOAD

SMALL

FUEL-LINE
TEMPERATURE

S22 — CALCULATE FUEL-LINE
PRESSURE VARYING RATE DFP
DFP =
(PFNEW-PFOLD)/DT

S23 — DFP<SLDFP? — YES

S24 — NO

PFOLD=PFNEW

S25 — FFW = 0
CLOSE
FUEL-LINE
WATER
DISCHARGE
VALVE

S17 — CALCULATE AMOUNT SWF
OF CONDENSED WATER
SWF = SWF + WF

S18 — SWF>SLSWF? — NO

YES

S19 — READ IN FUEL-LINE
PRESSURE PFOLD

S20 — SWF = 0
FFW = 1
OPEN FUEL-LINE WATER
DISCHARGE VALVE

END

13

# FIG.4

START

READ IN FUEL-LINE GAS DISCHARGE FLAG FFG — S31

FFG=1 ? — S32

**NO** → S33

READ IN OPERATING LOAD W

READ IN IMPURITY MIXING RATE NR — S34

IMPURITY MIXING RATE / OPERATING LOAD

CALCULATE IMPURITY CONCENTRATION INDEX NC
NC = NC + NR — S35

NC>SLNC? — S36

**NO** →

**YES**

READ IN FUEL-LINE PRESSURE PFOLD — S37

NC = 0
FFG = 1
OPEN FUEL-LINE WATER DISCHARGE VALVE — S38

**YES** →

FFG2=1 ? — S39

**YES** →

**NO**

READ IN FUEL-LINE PRESSURE PFNEW — S40

CALCULATE FUEL-LINE PRESSURE VARYING RATE DFP
DFP = (PFNEW-PFOLD)/DT — S41

DFP<SLDFP? — S42

**YES** → S44

**NO** → S43

PFOLD=PFNEW

FFG2=1
TMFG=-DT

TMFG =TMFG+DT — S45

TMFG>SLTMFG? — S46

**NO** →

**YES**

FFG2 = FFG = 0
TMFG = 0
CLOSE FUEL-LINE WATER DISCHARGE VALVE — S47

END

# FIG.5

START

↓

**READ IN AIR-LINE WATER DISCHARGE FLAG FAW** ⌐S51

↓

S52 — **FAW=1 ?**

— YES →

— NO ↓

S53 — **READ IN AIR-LINE TEMPERATURE TA AND OPERATING LOAD W**

↓

S54 — **READ IN AMOUNT WA OF COLLECTED CONDENSED WATER**

OPERATING LOAD — LARGE / SMALL

AIR-LINE TEMPERATURE

↓

S55 — **CALCULATE AMOUNT SWA OF CONDENSED WATER SWA = SWA + WA**

↓

S56 — **SWA>SLSWA?** — NO →

— YES ↓

S57 — **TMAW=-DT FAW=1 SWA=0**

↓

C

---

C

↓

S58 — **IS FFG = 1 OR FFW = 1 OR GIVEN TIME INTERVAL NOT ELAPSED AFTER FFG = 0 OR FFW = 0**

— YES → S61 — **CLOSE AIR-LINE WATER DISCHARGE VALVE**

— NO ↓ S59 — **OPEN AIR-LINE WATER DISCHARGE VALVE**

↓

S60 — **TMAW = TMAW + DT**

↓

S62 — **TMAW>SLTMAW?** — NO →

— YES ↓

S63 — **FAW = 0 CLOSE AIR-LINE WATER DISCHARGE VALVE**

↓

END

# FIG.6

AIR

HYDROGEN

FUEL CELL STACK — 1

FUEL-LINE WATER RECOVERY TANK — 19

HUMIDIFIER — WATER

FUEL GAS FLOW METER — 45

1a, 1b, 1c, 9, 11, 3, 17

AIR-LINE WATER RECOVERY TANK — 13

COMBUSTOR — 35

EXHAUST GAS

CONTROLLER — 7

DRAIN WATER

13a, 37, 41, 33, 29, 15, 31, 25, 23, 39, 43

EP 1 401 041 A2

**FIG.7**

START

READ IN FUEL-LINE WATER
DISCHARGE FLAG FFW AND
FUEL-LINE GAS DISCHARGE FLAG FFG — S111

S112
FFG=1 ?  — YES

NO  S114
FFW=1 ?  — YES

S113
SWF=0
FFW=0

NO

S115
READ IN FUEL-LINE
TEMPERATURE TF AND
OPERATING LOAD W

S120
READ IN OPERATING
LOAD W AND FUEL GAS
FLOW RATE Qf

S116
READ IN AMOUNT WF OF
COLLECTED CONDENSED
WATER

OPERATING LOAD — LARGE / SMALL
FUEL-LINE TEMPERATURE

S121
READ IN FUEL GAS
CONSUMPTION RATE Qs

FUEL GAS CONSUMPTION RATE
OPERATING LOAD

S117
CALCULATE AMOUNT SWF
OF CONDENSED WATER
SWF = SWF + WF

OVQ = Qf - Qs — S122

S123
OVQ>SLOVQ?  — YES

S118
SWF>SLSWF?  — NO

NO

S124
FFW = 0
CLOSE FUEL-LINE
WATER DISCHARGE
VALVE

YES

S119
SWF = 0
FFW = 1
OPEN FUEL-LINE WATER
DISCHARGE VALVE

END

# FIG.8

START

READ IN FUEL-LINE GAS DISCHARGE FLAG FFG — S131

S132

FFG=1 ? — YES

S133 — NO

READ IN OPERATING LOAD W — S134

READ IN IMPURITY MIXING RATE NR

IMPURITY MIXING RATE

OPERATING LOAD

S135

CALCULATE IMPURITY CONCENTRATION INDEX NC
NC = NC + NR

S136

NC>SLNC? — NO

YES

NC = 0
FFG = 1
OPEN FUEL-LINE WATER DISCHARGE VALVE — S137

S138

FFG2=1 ? — YES

NO

READ IN OPERATING LOAD W AND FUEL GAS FLOW RATE Qf — S139

READ IN FUEL GAS CONSUMPTION RATE Qs

FUEL GAS CONSUMPTION RATE

OPERATING LOAD

S140

OVQ = Qf - Qs — S141

S142

OVQ>SLOVQ? — YES

NO

S143

FFG2=1
TMFG=-DT

S144 — TMFG=TMFG+DT

S145

TMFG>SLTMFG? — NO

YES

S146

FFG2 = FFG = 0
TMFG = 0
CLOSE FUEL-LINE WATER DISCHARGE VALVE

END